(19) Europäisches Patentamt
European Patent Office
Office européen des brevets

(11) **EP 2 656 558 B1**

(12) **FASCICULE DE BREVET EUROPEEN**

(45) Date de publication et mention de la délivrance du brevet:
**21.06.2017 Bulletin 2017/25**

(51) Int Cl.:
***H04L 12/70*** *(2013.01)*

(21) Numéro de dépôt: **11794768.9**

(22) Date de dépôt: **14.12.2011**

(86) Numéro de dépôt international:
**PCT/EP2011/072752**

(87) Numéro de publication internationale:
**WO 2012/084639 (28.06.2012 Gazette 2012/26)**

(54) **PROCÉDÉ DE GÉNÉRATION D'INFORMATION DE ROUTAGE, DANS UN RÉSEAU MAILLÉ MOBILE, PERMETTANT D'ANTICIPER LA SORTIE D'UN NOEUD DU RÉSEAU ET DISPOSITIF DE ROUTAGE METTANT EN OEUVRE LE PROCÉDÉ**

VERFAHREN ZUR ERZEUGUNG VON ROUTING-INFORMATIONEN IN EINEM MOBILEN MESH-NETZWERK ZUR ANTIZIPATION DES AUSGANGS EINES KNOTENS AUS DEM NETZWERK UND ROUTING-VORRICHTUNG ZUR DURCHFÜHRUNG DES VERFAHRENS

METHOD OF GENERATING ROUTING INFORMATION, IN A MOBILE MESHED NETWORK, MAKING IT POSSIBLE TO ANTICIPATE THE EXIT OF A NODE FROM THE NETWORK AND ROUTING DEVICE IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2010 FR 1005091**

(43) Date de publication de la demande:
**30.10.2013 Bulletin 2013/44**

(73) Titulaire: **THALES**
**92400 Courbevoie (FR)**

(72) Inventeurs:
• **BENBADIS, Farid**
**F-92704 Colombes Cedex (FR)**
• **MELKI, Christophe**
**F-92704 Colombes Cedex (FR)**
• **IANONNE, Luigi**
**F-92704 Colombes Cedex (FR)**
• **FRANCOIS, Pierre**
**F-92704 Colombes Cedex (FR)**

(74) Mandataire: **HAMMES, Pierre et al**
**Marks & Clerk France**
**Immeuble Visium**
**22, avenue Aristide Briand**
**94117 Arcueil Cedex (FR)**

(56) Documents cités:
• **SHAND S BRYANT CISCO SYSTEMS M: "A Framework for Loop-Free Convergence; rfc5715.txt", A FRAMEWORK FOR LOOP-FREE CONVERGENCE; RFC5715.TXT, INTERNET ENGINEERING TASK FORCE, IETF; STANDARD, INTERNET SOCIETY (ISOC) 4, RUE DES FALAISES CH-1205 GENEVA, SWITZERLAND, 15 janvier 2010 (2010-01-15), pages 1-22, XP015068152,**
• **YOSHIHIRO T: "Loop-Free Link Stability Metrics for Proactive Routing in Wireless Ad Hoc Networks", COMMUNICATIONS, 2009. ICC '09. IEEE INTERNATIONAL CONFERENCE ON, IEEE, PISCATAWAY, NJ, USA, 14 juin 2009 (2009-06-14), pages 1-5, XP031506121, ISBN: 978-1-4244-3435-0**

## Description

La présente invention concerne un procédé de génération d'information de routage, dans un réseau maillé mobile, permettant d'anticiper la sortie d'un noeud du réseau en maîtrisant à la fois le temps de convergence vers un état stable et le taux de pertes de paquets résultant de cette sortie. L'invention concerne également un dispositif de routage mettant en oeuvre ledit procédé.

Le domaine de l'invention est celui des réseaux maillés ou « mesh networks » en anglais. Ce type de réseaux est caractérisé par une topologie pour laquelle tous les noeuds sont connectés de proche en proche, sans hiérarchie centrale. Tous les noeuds d'un réseau maillé ont des rôles similaires et peuvent notamment tous exécuter une fonction de routage des flux de données qui transitent dans le réseau.

L'invention concerne plus particulièrement les réseaux maillés sans fils mobiles ou « wireless mobile mesh networks » en anglais. Dans de tels réseaux, chaque noeud est mobile et peut communiquer, via une liaison radio, avec ses plus proches voisins. Ce type d'architecture de réseau présente une très grande flexibilité et peut être appliqué à de nombreux scénarios comme, par exemple, l'accès à Internet en mobilité ou un réseau de véhicules interconnectés entre eux et déployés sur le terrain pour répondre à une situation d'urgence.

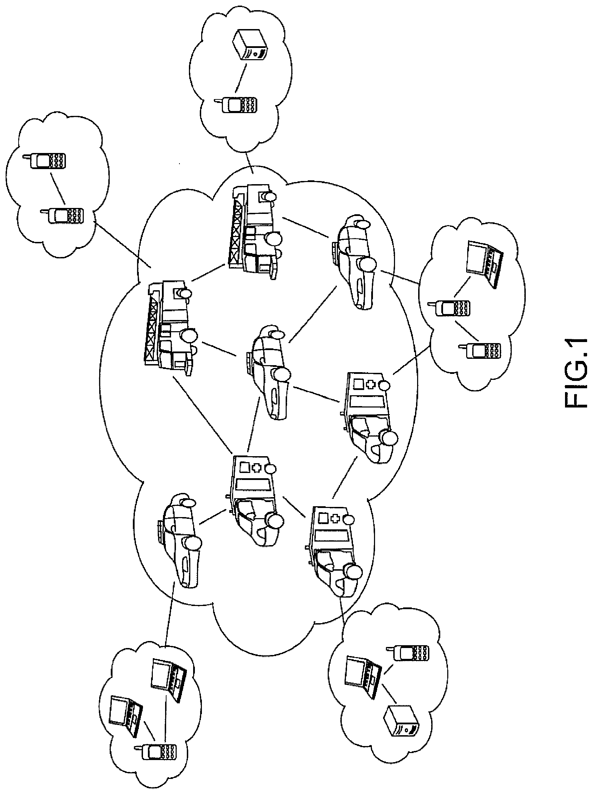

Dans le premier scénario, les fournisseurs d'accès à Internet mobile peuvent utiliser la topologie d'un réseau maillé pour réduire les coûts de déploiement d'un réseau en mode infrastructure. Dans le second scénario, tel qu'illustré à la figure 1, une pluralité de véhicules communiquent entre eux au sein d'un réseau privé. Chaque véhicule comporte un routeur sans fil associé à un ou plusieurs terminaux connectés à ce routeur. Un tel réseau est communément désigné par le terme MANET de l'anglais « Mobile Ad Hoc Network ».

Dans un réseau maillé mobile, un des noeuds du réseau peut, à tout instant, quitter le réseau. Dans le cas d'un réseau d'accès à Internet en mobilité, le fournisseur d'accès peut réaliser une maintenance des équipements du réseau, en particulier des routeurs sans fils ce qui nécessite de les déconnecter pendant la période nécessaire à la maintenance. Dans le cas d'un réseau de véhicules interconnectés, un des véhicules peut quitter à tout moment le réseau et peut même anticiper ce départ.

Lorsqu'un noeud quitte le réseau, les routeurs doivent modifier leurs tables de routage pour éviter ce noeud afin que les routes n'empruntent plus ce noeud. Si la déconnexion d'un noeud n'est pas anticipée, cela peut provoquer des périodes d'instabilité dans le réseau dues au fait que les tables de routage ne sont pas mises à jour simultanément et que les données peuvent toujours être aiguillées vers un noeud inexistant.

Dans ce contexte, il est important de définir un protocole de routage adapté aux spécificités d'un réseau mobile maillé et en particulier aux instabilités liées à l'environnement radio et à la mobilité des noeuds.

Les méthodes connues permettant de faire face aux instabilités d'un réseau mobile maillé rapidement déployable sont basées sur des protocoles de routage qui prennent en compte la déconnexion d'un noeud du réseau essentiellement due à la mobilité de ce noeud en dehors de la portée du lien radio qui le relie à ses voisins. Une telle déconnexion n'est pas prédictible. Les méthodes connues mettent en oeuvre des protocoles de routage qui réagissent, après coup, à la déconnexion d'un noeud mais ne permettent pas d'en anticiper le départ du réseau. Parmi les protocoles de routage adaptés aux réseaux maillés mobiles, on peut citer les protocoles OLSR « Optimized Link State Routing », AODV « Ad hoc On-Demand Distance Vector Routing », DSDV « Destination-Sequenced Distance-Vector Routing », ZRP « Zone Routing Protocol » ou encore MeshDV. Toutes ces solutions ne prennent cependant pas en compte le départ anticipé et connu d'un noeud du réseau pour limiter les phénomènes de boucles de routage qui peuvent engendrer des pertes de données. La RFC5715 de l'IETF "A Framework for Loop-Free Convergence" suggère de déterminer un incrément optimum et de le répercuter sur le coût des liens diffusés dans le réseau pour limiter l'apparition de boucles de routage dans le réseau. La présente invention vise à remédier aux limitations des méthodes connues et propose à cet effet un procédé permettant de prendre en compte le départ d'un noeud du réseau de façon anticipée en générant des informations de routage adaptées pour minimiser les perturbations induites dans le réseau par ce départ.

L'invention a ainsi pour objet un procédé de génération d'informations de routage selon la revendication 1.

L'invention a également pour objet un dispositif de routage, embarqué dans un noeud mobile communiquant dans un réseau maillé, selon la revendication 7.

D'autres caractéristiques et avantages de l'invention apparaîtront à l'aide de la description qui suit faite en regard de dessins annexés qui représentent :

- la figure 1, un schéma illustrant un exemple de réseau maillé mobile, les noeuds du réseau étant constitués de véhicules,
- la figure 2, un schéma illustrant le phénomène de boucles de routage dans un réseau maillé suite à la rupture d'un lien,
- la figure 3, un schéma illustrant une méthode de l'art antérieur pour résoudre le phénomène de boucles de routage dans un réseau maillé suite à la rupture d'un lien,
- la figure 4, un schéma illustrant la mise en oeuvre du procédé selon l'invention sur un réseau maillé comportant cinq noeuds mobiles,
- la figure 5, un schéma comparatif illustrant la mise en oeuvre de la méthode de l'état de la technique le plus proche sur le même réseau maillé que celui de la figure 4,

- la figure 6, un diagramme, en trois dimensions, représentant, pour un réseau maillé de caractéristiques données, le nombre moyen de boucles de routage apparaissant dans le réseau en fonction du nombre de noeuds sortants et d'un incrément de métrique.

Dans un réseau maillé, les paquets constituant un flux de données sont transmis d'un noeud source vers un noeud destination en suivant un chemin qui les relie à travers le réseau. La détermination du chemin optimal, en termes de garantie d'acheminement du paquet vers sa destination, est réalisée, notamment, par un ou plusieurs protocoles de routage. Une classe de protocoles particulièrement adaptée aux réseaux maillés est celle des protocoles à état de lien, comme par exemple le protocole OSPF « Open Shortest Path First » ou OLSR « Optimized Link State Routing ». Les protocoles à état de lien reposent sur un algorithme de routage exécuté dans chaque noeud du réseau maillé qui réalise alors une fonction de routeur.

Chaque noeud du réseau alerte ses voisins sur l'état des liens auquel il est connecté en transmettant, notamment, une information de routage sous forme de coût associé au lien. Cette information de routage peut être basée sur n'importe quelle métrique qui reflète l'état de la transmission sur un lien, par exemple la bande passante ou le délai de transmission. Cette métrique prend le plus souvent la forme d'un nombre qui varie entre une valeur minimum, le plus souvent égale à 1, et une valeur maximum donnée MAX_METRIC. Elle est le plus souvent proportionnelle au coût lié à l'utilisation du lien correspondant.

Une métrique particulièrement adaptée aux protocoles à état de lien est la métrique ETX « Expected Transmission Count » qui est basée sur l'estimée de la qualité d'un lien. Chaque noeud du réseau estime la qualité des liens auxquels il est connecté en mesurant une probabilité de perte de paquets sur ce lien. Des paquets spécifiques sont utilisés pour réaliser cette mesure. La métrique ETX prend également en compte l'aspect bidirectionnel d'un lien. La métrique ETX associée au lien reliant les noeuds A et B peut être exprimée à l'aide de la relation suivante: $ETX = \dfrac{1}{LQ*NLQ}$ , avec LQ l'estimée de la qualité de la transmission dans le sens A vers B et NLQ l'estimée de la qualité de transmission dans le sens inverse, de B vers A. Ainsi le coût associé à chaque lien du réseau est double et peut être asymétrique.

Les métriques ainsi établies sont transmises, de proche en proche, à chaque noeud du réseau qui regroupe l'ensemble des métriques dans une base de données qui constitue une cartographie de la topologie de l'ensemble du réseau. A partir de cette cartographie, chaque noeud détermine le chemin de coût minimum qui permet de relier un autre noeud quelconque du réseau et mémorise les résultats dans une table de routage.

Lorsqu'un noeud du réseau, ou un lien entre deux noeuds, devient défectueux, les tables de routage des noeuds restants doivent être mises à jour. Suite à un événement qui modifie la topologie du réseau, il existe une période de temps pendant laquelle les tables de routage des différents noeuds ne sont plus cohérentes entre elles. En effet, l'information de routage associée à la modification du réseau parvient aux noeuds de façon progressive et non de façon simultanée. Ainsi, les tables de routage de l'ensemble des noeuds ne sont pas mises à jour simultanément. Ce fait peut entrainer un phénomène de boucles de routage dans le réseau.

Une boucle de routage peut apparaître dans plusieurs cas. Par exemple, un noeud A transmet un paquet vers un noeud destination B via un noeud intermédiaire D selon sa table de routage qui est à jour. La table de routage du noeud intermédiaire D n'est pas encore mise à jour et indique à D que le chemin le plus court pour parvenir au noeud destination B passe par le noeud A. Dans ce cas, les paquets vont transiter entre le noeud A et le noeud D tant que les tables de routage de ces deux noeuds ne seront pas actualisées. Un paquet comporte le plus souvent un compteur indiquant le nombre de noeuds intermédiaires qu'il a traversé depuis son émission et est supprimé par un routeur dès que ce compteur dépasse une valeur maximale. Ainsi, les boucles de routage peuvent entrainer des pertes de paquets au sein du réseau. Elles peuvent apparaître entre deux noeuds voisins ou même de façon indirecte entre plusieurs noeuds formant un circuit bouclé.

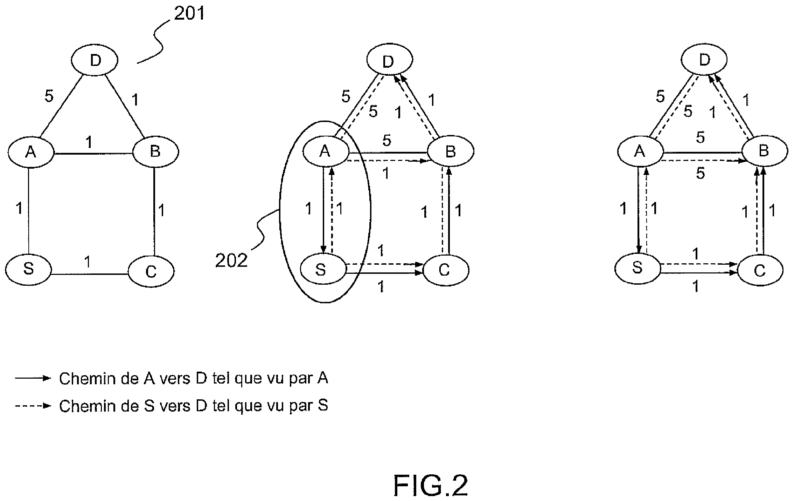

La figure 2 illustre, sur un exemple de réseau maillé, l'apparition d'une boucle de routage suite à la défaillance d'un lien du réseau.

Un réseau 201 maillé comporte cinq noeuds A,B,C,S et D. Tous les liens reliant deux noeuds voisins sont affectés d'une métrique de qualité égale à 1 sauf le lien reliant les noeuds A et D qui présente une métrique égale à 5.

A un instant t le lien reliant les noeuds A et B est coupé provoquant la mise à jour de la table de routage du noeud A qui modifie la métrique du lien A-B pour lui affecter la valeur 5 qui est dans l'exemple la valeur maximum possible. Au même instant t, le noeud S n'a pas encore reçu l'information sur l'état du lien A-B et n'a pas encore modifié sa table de routage qui comporte toujours une métrique de valeur égale à 1 pour le lien A-B. Considérons alors la transmission de paquets du noeud source S vers le noeud destination D. La table de routage du noeud S indique que le chemin le plus court, compte tenu des métriques de chaque lien, pour atteindre le noeud D est de passer successivement par les noeuds A et B. Le chemin reliant les noeuds S et D tel que vu par le routeur du noeud S est indiqué sur la figure 2 en trait pointillé. Le paquet émis par le noeud S est donc dirigé vers le noeud A. Or, la table de routage du noeud A étant déjà mise à jour, le chemin le plus court pour atteindre le noeud D depuis le noeud A consiste, après la rupture du lien A-B, à passer successivement par les noeuds S,C et B. Le chemin reliant les noeuds A et D tel que vu par le routeur du noeud A est indiqué sur la figure 2 en trait plein. Ainsi, le routeur du noeud A va retransmettre le paquet reçu au noeud S ce qui va entrainer la création d'une boucle de routage 202 due aux valeurs de métriques différentes, pour le chemin A-B, du point de vue des noeuds A et S.

La boucle de routage disparait une fois que l'information concernant la mise à jour de la métrique du lien A-B est propagée jusqu'au noeud S tel qu'illustré sur la partie la plus à droite de la figure 2.

Le document [1] décrit une méthode permettant de lutter contre l'apparition de boucles de routage lorsqu'un lien d'un réseau est défectueux. La méthode proposée consiste à incrémenter la métrique associée à ce lien de façon progressive et selon une séquence prédéterminée afin de supprimer l'utilisation de ce lien par les tables de routage du réseau. Ainsi, il est possible d'anticiper la déconnexion d'un lien, due par exemple à une maintenance des équipements, en augmentant de façon incrémentale la métrique de ce lien.

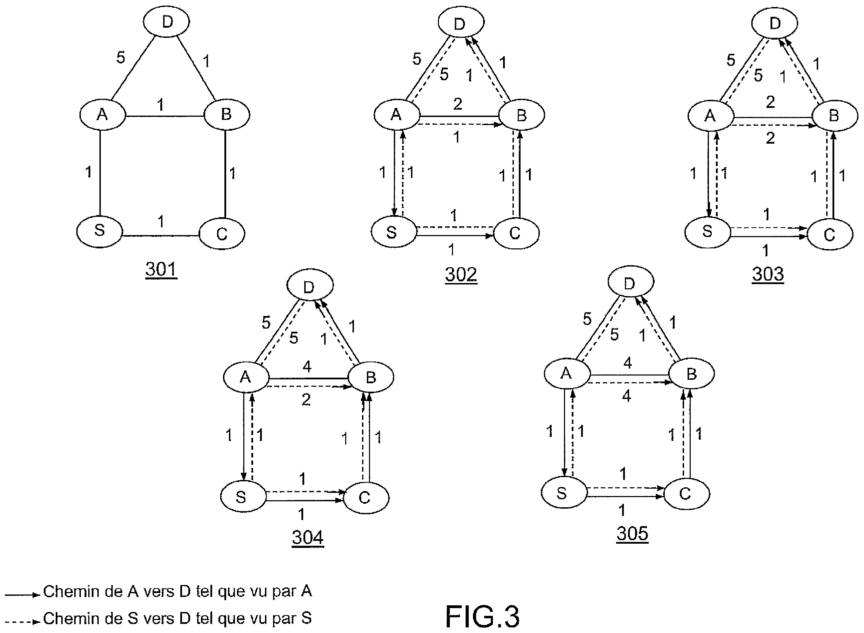

La figure 3 reprend l'exemple de réseau maillé de la figure 2 auquel est appliquée la méthode du document [1].

Pour éviter le phénomène de boucle de routage apparaissant suite à la rupture du lien reliant les noeuds A et B, la métrique du lien A-B est incrémentée progressivement au lieu d'être fixée directement à sa valeur maximum. Dans l'étape 302, le routeur du noeud A met à jour sa table de routage en affectant la métrique 2 au lien A-B. Le plus court chemin pour relier A et D passe donc toujours par le noeud B. Au même moment, le noeud S n'a pas encore mis à jour sa table de routage, le plus court chemin pour relier le noeud D consiste à passer par les noeuds A et B ou par les noeuds C et B qui présentent un coût identique. Aucune boucle de routage n'apparait à l'étape 302.

A l'étape 303, le routeur du noeud S met à jour sa table de routage en affectant la métrique 2 au lien A-B. Le plus court chemin pour relier les noeuds S et D devient alors le chemin S-C-B-D. Aucune boucle de routage n'apparait à l'étape 303.

A l'étape 304, le routeur du noeud A augmente progressivement la métrique du chemin défectueux A-B en passant sa valeur à 4. Le plus court chemin pour relier les noeuds A et D passe alors par les noeuds S,C,B et D. Aucune boucle de routage n'apparait non plus à l'étape 304.

Enfin dans une étape finale 305, le routeur du noeud S incrémente à son tour la métrique du chemin A-B vers la valeur 4 ce qui ne modifie pas le plus court chemin entre les noeuds S et D.

Le fait d'augmenter progressivement la métrique du lien défectueux permet d'éviter l'apparition d'une boucle de routage.

La méthode proposée dans le document [1] s'applique aux réseaux filaires pour lesquels chaque lien est indépendant des autres. En particulier dans un réseau filaire, un routeur est connecté à plusieurs liens filaires par l'intermédiaire de plusieurs interfaces distinctes. Ainsi, il est possible de déconnecter un seul de ces liens sans forcément affecter les autres.

Dans un réseau maillé mobile, au contraire, la sortie d'un noeud du réseau entraine forcément la déconnexion de tous les liens sans fil qui le relient à ses voisins. Ainsi, la méthode du document [1] n'est pas adaptée aux réseaux maillés mobiles car elle ne prend pas en compte la possibilité d'une déconnexion simultanée de tous les liens connectés à un même noeud.

En reprenant l'exemple de la figure 3, si le noeud A sort intégralement du réseau, les liens A-D,A-B et A-S sont affectés et la méthode décrite dans [1] s'applique indépendamment à chacun de ces liens sans prendre en compte la modification des métriques des liens voisins. Le coût d'exécution de la méthode [1] est ainsi proportionnel au nombre de liens qui relient le noeud sortant à d'autres noeuds du réseau et n'est donc pas optimal. De plus, un inconvénient important de la méthode [1] est le temps de convergence, c'est-à-dire le temps nécessaire avant d'atteindre la dernière étape d'incrémentation des métriques. Ce temps de convergence devient très important lorsque le nombre de liens associés au noeud sortant est lui-même important car le nombre d'incréments de métriques à réaliser est conséquent. L'augmentation du temps de convergence est un facteur limitant pour mettre en oeuvre une sortie rapide d'un noeud du réseau.

Un des objectifs de la présente invention est de limiter l'apparition de boucles de routage et de permettre une reconfiguration transparente d'un réseau maillé mobile lorsqu'un noeud mobile quitte ce réseau. L'invention s'applique aux scénarios pour lesquels la sortie du réseau est ou peut être prévue à l'avance et signalée aux autres noeuds du réseau. La méthode proposée prend en compte la déconnexion simultanée de tous les liens qui relient le noeud sortant au réseau et permet ainsi d'optimiser la complexité de mise en oeuvre et le temps de convergence par rapport aux méthodes connues, notamment la méthode [1], qui n'est adaptée qu'aux réseaux filaires.

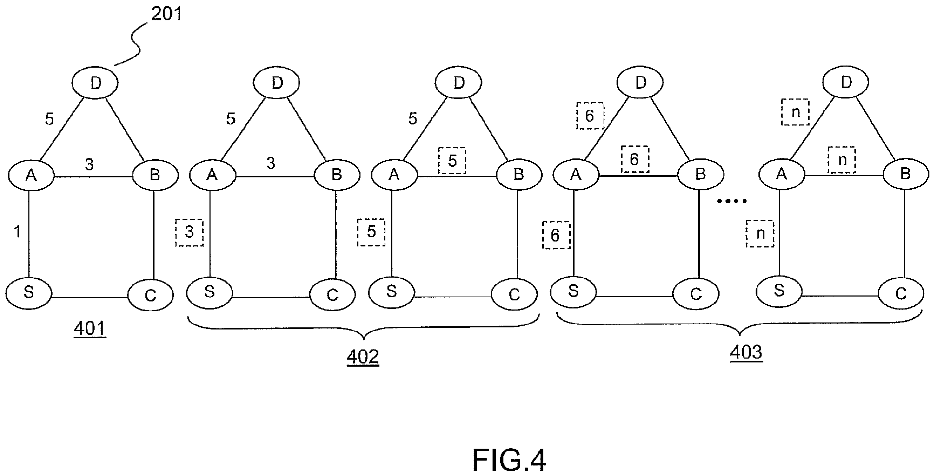

La figure 4 illustre la mise en oeuvre du procédé selon l'invention pour un réseau maillé identique à celui des figures 2 et 3 comportant cinq noeuds. Les noeuds A,B,C,D,S sont des noeuds mobiles qui communiquent avec leur voisins via une liaison radio.

Dans l'exemple de la figure 4, le noeud A s'apprête à quitter le réseau. Le routeur embarqué dans le noeud A sait anticiper le départ du noeud A. Cette anticipation peut être réalisée par différents moyens. Une information sur le départ futur du noeud A peut être obtenue à partir d'un capteur de mouvement embarqué dans le noeud A ou par le biais d'une alarme déclenchée pour avertir, de façon proactive, du départ imminent du noeud A. Sans sortir du cadre de l'invention, tout moyen permettant de communiquer au routeur d'un noeud du réseau l'information selon laquelle ledit noeud s'apprête à quitter le réseau est compatible du procédé selon l'invention.

Lorsque le routeur du noeud A sait que ledit noeud va quitter le réseau, il met en oeuvre le procédé de génération d'information de routage, selon l'invention, décrit à présent.

Dans l'exemple de la figure 4, les liens A-D, A-B et A-S ont initialement des métriques de valeurs égales respectivement à 5, 3 et 1. Ces trois liens vont être déconnectés afin de permettre le départ, sans conséquences, du noeud A. Dans une première étape 401, le routeur du noeud A tri les métriques des trois liens qui vont être déconnectés par ordre croissant de leurs valeurs. Dans une deuxième étape 402, le routeur du noeud A incrémente progressivement la métrique du ou des liens présentant la valeur de métrique la plus faible parmi les trois liens considérés vers la valeur de métrique supérieure dans la liste établie à la première étape. Cette opération est réalisée plusieurs fois jusqu'à ce que les trois liens se voient affectés une valeur de métrique égale à la valeur la plus élevée initialement parmi les trois liens. Dans l'exemple de la figure 4, la métrique du lien A-S est tout d'abord incrémentée de 1 à 3 pour atteindre la valeur de métrique du lien A-B. Ensuite les métriques des liens A-S et A-B sont incrémentées de 3 vers 5 pour atteindre la valeur de métrique du lien A-D. Cette incrémentation peut être réalisée en une seule étape ou par incréments successifs de 1. A la fin de la deuxième étape 402, les métriques des trois liens ont la même valeur égale à la valeur la plus élevée initialement. Dans une troisième étape 403, le routeur du noeud A va incrémenter simultanément les métriques des trois liens jusqu'à arriver à une valeur maximum n prédéterminée. Dans un mode de réalisation particulier de l'invention, l'incrément appliqué aux trois métriques est fixé à 1. Dans un autre mode de réalisation particulier de l'invention, l'incrément est fixé à une valeur $\Delta m$ constante déterminée par simulation. Les valeurs des métriques sont incrémentées de la valeur $\Delta m$ jusqu'à arriver à la valeur maximale n prédéterminée. A chaque fois que la valeur de la métrique d'un lien est modifiée, le routeur A met à jour sa table de routage et transmet cette information aux autres noeuds du réseau qui vont progressivement à leur tour mettre à jour leurs tables de routage. Une fois que les métriques des trois liens ont atteint la valeur maximum n, le noeud A peut quitter le réseau sans engendrer ou en limitant l'apparition de boucles de routage.

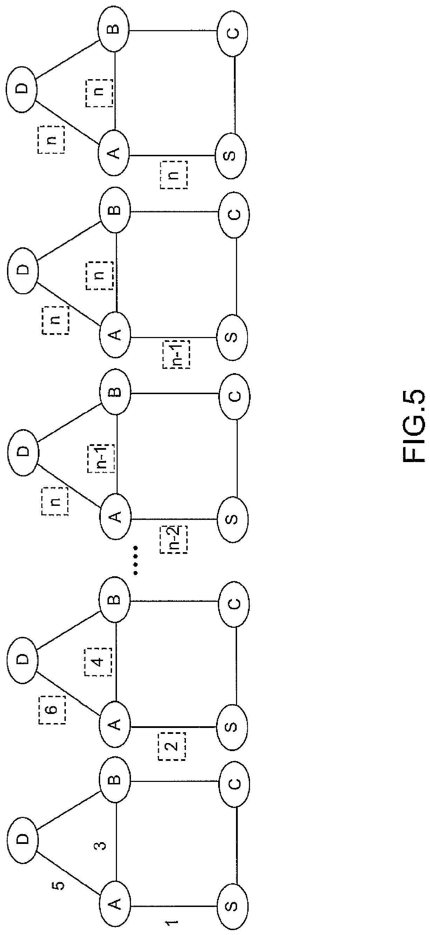

A titre comparatif, la figure 5 illustre une application de la méthode du document [1], considéré par le demandeur comme l'état de la technique le plus proche, sur le même réseau maillé que celui de la figure 4 et pour le même scénario de départ du noeud A.

Les incrémentations de métriques sont identifiées par un carré en trait pointillé. La méthode de l'art antérieur nécessite l'incrémentation progressive des métriques de chaque lien, indépendamment des autres. Ainsi le nombre d'opérations nécessaire avant d'arriver à un état stable est bien supérieur à celui nécessaire dans le cas du procédé selon l'invention.

La valeur $\Delta m$ de l'incrément de métrique est déterminée par simulation. Cette valeur a un impact direct sur le temps de convergence mais également sur le nombre de boucles de routage qui apparait dans le réseau et indirectement le taux de pertes paquets. En effet, plus l'incrément $\Delta m$ est élevé, plus la convergence vers l'état final est rapide mais à l'inverse plus l'apparition de boucles de routage est probable.

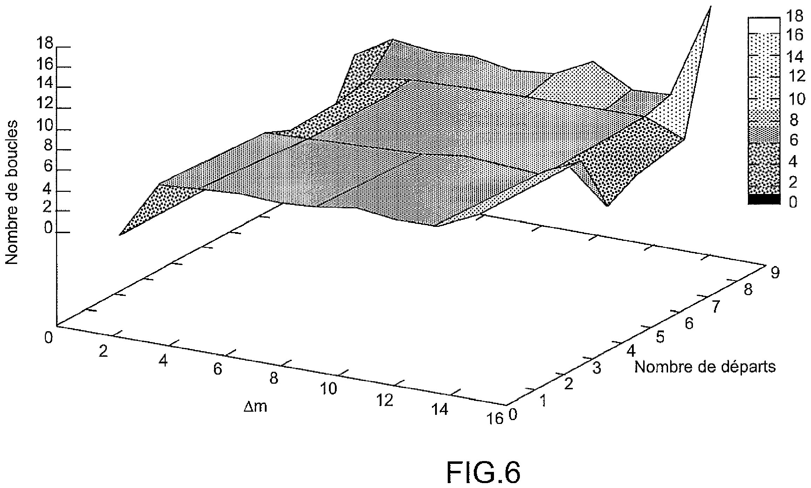

La figure 6 illustre ce phénomène. Elle représente, sur un graphique en trois dimensions, le nombre de boucles de routage observées en fonction de la valeur de l'incrément $\Delta m$ choisi et le nombre de noeuds qui vont quitter le réseau. Le graphique de la figure 6 est obtenu pour un scénario donné de réseau maillé qui comporte 60 noeuds, chaque noeud ayant un nombre maximum de voisins égal à 18. Deux noeuds voisins communiquent ensemble directement via une liaison radio. La figure 6 permet d'observer que pour un nombre de noeuds sortants donné, plus l'incrément de métrique $\Delta m$ est faible, moins le phénomène d'apparition de boucle de routage est occurent. Le choix de la valeur $\Delta m$ résulte d'un compromis entre le taux de pertes maximum acceptable du fait de l'apparition de boucles de routage et le temps de convergence maximum souhaité. Le procédé selon l'invention permet de maitriser le nombre de boucles de routage dans un réseau maillé donné.

Le procédé selon l'invention permet d'anticiper le départ d'un noeud du réseau de façon à ce qu'aucune donnée ne transite plus par ce noeud avant son départ. Ce résultat est obtenu par une modification progressive des informations de routage associées à chaque lien radio reliant le noeud sur le départ à ses voisins.

Le procédé selon l'invention a pour principal avantage une optimisation du temps de convergence nécessaire avant d'atteindre un état stable à la suite duquel le noeud peut quitter le réseau sans engendrer de boucle de routage. La mise en oeuvre de l'invention est réalisée depuis le routeur du noeud sortant et ne nécessite aucune modification du protocole de routage à état de lien exécuté ni aucun envoi de message supplémentaire à travers le réseau.

### _Références_

[1] P. Francois, M. Shand, and O. Bonaventure, "Disruption free topology reconfiguration in OSPF networks," 26th IEEE International Conférence on Computer Communications (INFOCOM'07), May 2007

### Revendications

**1.** Procédé de génération d'informations de routage, sous forme de métriques de liens, pour anticiper, dans un réseau maillé (201) comportant une pluralité de noeuds (A,B,C,S,D) mobiles mettant chacun en oeuvre un dispositif de routage, la sortie du réseau (201) d'au moins un desdits noeuds (A) entrainant la désactivation des liens (A-S,A-B,A-D) de communications qui le relie directement à ses noeuds voisins (S,B,D), le procédé étant **caractérisé en ce qu'**il comporte au moins les étapes successives suivantes, exécutées par le dispositif de routage dudit noeud (A) sortant du réseau (201):

- évaluer (401) les valeurs d'information de routage associées au groupe de liens (A-S,A-B,A-D) reliant ledit noeud (A) à ses noeuds voisins (S,B,D),
- quand les valeurs d'informations de routage associées aux liens dudit groupe de liens ne sont pas toutes égales, remplacer (402) successivement la ou les valeur(s) d'information de routage la(les) plus faible(s) parmi celles associées aux liens dudit groupe (A-S,A-B,A-D) par la valeur d'information de routage immédiatement supérieure parmi celles associées aux liens dudit groupe (A-S,A-B,A-D) et jusqu'à ce que les valeurs d'information de routage associées aux liens dudit groupe (A-S,A-B,A-D) soient toutes égales,
- puis incrémenter (403) simultanément l'ensemble des valeurs d'information de routage associées aux liens dudit groupe (A-S,A-B,A-D) d'un incrément $\Delta m$ prédéterminé et répéter cette opération jusqu'à ce que lesdites valeurs atteignent un maximum donné, l'incrément $\Delta m$ étant déterminé de façon à limiter l'apparition de boucles de routage dans le réseau en dessous d'un nombre donné et à limiter le temps de convergence s'écoulant entre l'initiation du procédé et sa terminaison.
- après chaque modification de la valeur d'une information de routage, ledit noeud (A) sortant du réseau transmet à ses noeuds voisins cette modification.

**2.** Procédé selon la revendication 1 **caractérisé en ce que** l'incrément $\Delta m$ est fixé à 1.

**3.** Procédé selon l'une des revendications précédentes **caractérisé en ce que** l'information de routage associée à un lien du réseau est une métrique proportionnelle au coût lié à l'utilisation dudit lien.

**4.** Procédé selon l'une des revendications précédentes **caractérisé en ce que** lesdites informations de routage sont utilisées par un protocole de routage à état de lien pour déterminer, à tout instant, le chemin de cout optimal entre deux noeuds.

**5.** Procédé selon l'une des revendications précédentes **caractérisé en ce que** le dispositif de routage du noeud (A) est alerté de la sortie future du noeud (A) du réseau par au moins l'un des moyens suivants : une alerte générée par le noeud (A) ou une détection des mouvements du noeud (A).

**6.** Procédé selon l'une des revendications précédentes **caractérisé en ce que** le noeud (A) quitte le réseau lorsque les valeurs d'information de routage associées aux liens dudit groupe (A-S,A-B,A-D) ont atteint un maximum donné.

**7.** Dispositif de routage, embarqué dans un noeud mobile communiquant dans un réseau maillé, adapté à mettre en oeuvre le procédé de génération d'informations de routage selon l'une des revendications 1 à 6.

**8.** Dispositif de routage selon la revendication 7 **caractérisé en ce qu'**il est en outre adapté à produire une information sur l'instant d'achèvement dudit procédé de génération d'informations de routage selon l'une des revendications 1 à 6.

**Patentansprüche**

**1.** Verfahren zum Erzeugen von Routing-Informationen in Form von Verbindungsmetriken, um in einem vermaschten Netz (201), das mehrere mobile Knoten (A, B, C, S, D) umfasst, die jeweils eine Routing-Vorrichtung betreiben, den Ausgang des Netzes (201) von wenigstens einem der Knoten (A) vorherzusagen, der die Deaktivierung der Kommunikationsverbindungen (A-S, A-B, A-D) herbeiführt, die ihn direkt mit seinen Nachbarknoten (S, B, D) verbinden, wobei das Verfahren **dadurch gekennzeichnet ist, dass** es wenigstens die folgenden aufeinander folgenden Schritte beinhaltet, ausgeführt von der Routing-Vorrichtung des das Netz (201) verlassenden Knotens (A):

- Beurteilen (401) der Routing-Informationswerte, die mit der Gruppe von Verbindungen (A-S, A-B, A-D) assoziiert sind, die den Knoten (A) mit seinen Nachbarknoten (S, B, D) verbinden,
- wenn die mit den Verbindungen der Verbindungsgruppe assoziierten Routing-Informationswerte nicht alle gleich sind, aufeinander folgendes Ersetzen (402) der ein oder mehreren schwächsten Routing-Informationswerte unter denen, die mit den Verbindungen der Gruppe (A-S, A-B, A-D) assoziiert sind, durch den unmittelbar höheren Routing-Informationswert unter denen, die mit den Verbindungen der Gruppe (A-S, A-B, A-D) assoziiert sind, und bis die mit den Verbindungen der Gruppe (A-S, AB, A-D) assoziierten Routing-Informationswerte alle gleich sind,
- dann gleichzeitiges Inkrementieren (403) des Satzes von Routing-Informationswerten, die mit den Verbindungen der Gruppe (A-S, A-B, A-D) assoziiert sind, um ein vorbestimmtes Inkrement Δm, und Wiederholen dieses Vorgangs, bis die Werte ein gegebenes Maximum erreichen, wobei das Inkrement Δm so bestimmt wird, dass es das Auftreten von Routing-Schleifen in dem Netz auf unter eine gegebene Anzahl begrenzt und die Konvergenzzeit zwischen Anfang und Ende des Verfahrens begrenzt,

- wobei der das Netz verlassende Knoten (A), nach jeder Modifikation des Wertes einer Routing-Information, diese Modifikation zu seinen Nachbarknoten überträgt.

2. Verfahren nach Anspruch 1, **dadurch gekennzeichnet, dass** das Inkrement Δm auf 1 festgelegt ist.

3. Verfahren nach einem der vorherigen Ansprüche, **dadurch gekennzeichnet, dass** die mit einer Verbindung des Netzes assoziierte Routing-Information eine Metrik proportional zu den mit der Nutzung der Verbindung verbundenen Kosten ist.

4. Verfahren nach einem der vorherigen Ansprüche, **dadurch gekennzeichnet, dass** die Routing-Informationen von einem Routing-Protokoll im Verbindungszustand benutzt werden, um in jedem Augenblick den Weg mit optimalen Kosten zwischen zwei Knoten zu bestimmen.

5. Verfahren nach einem der vorherigen Ansprüche, **dadurch gekennzeichnet, dass** die Routing-Vorrichtung des Knotens (A) über den zukünftigen Ausgang des Knotens (A) des Netzes mit wenigstens einem der folgenden Mittel benachrichtigt wird: eine vom Knoten (A) erzeugte Benachrichtigung oder eine Detektion von Bewegungen des Knotens (A).

6. Verfahren nach einem der vorherigen Ansprüche, **dadurch gekennzeichnet, dass** der Knoten (A) das Netz verlässt, wenn die mit den Verbindungen der Gruppe (A-S, A-B, A-D) assoziierten Routing-Informationswerte ein gegebenes Maximum erreicht haben.

7. Routing-Vorrichtung, installiert in einem mobilen Knoten, der mit einem vermaschten Netz kommuniziert, ausgelegt zum Implementieren des Verfahrens zum Erzeugen von Routing-Informationen nach einem der Ansprüche 1 bis 6.

8. Routing-Vorrichtung nach Anspruch 7, **dadurch gekennzeichnet, dass** sie ferner zum Produzieren einer Information über den Moment der Vollendung des Verfahrens zum Erzeugen von Routing-Informationen nach einem der Ansprüche 1 bis 6 ausgelegt ist.

**Claims**

1. A method of generating routing information in the form of metrics of links for anticipating, in a meshed network (201) comprising a plurality of mobile nodes (A, B, C, S, D) each implementing a routing device, the departure from the network (201) of at least one of said nodes (A) bringing about the deactivation of the communication links (A-S, A-B, A-D) which link it directly to its neighbouring nodes (S, B, D), the method being **characterised in that** it comprises at least the following successive steps, executed by the routing device of said node (A) leaving the network (201):

- evaluating (401) the routing information values associated with the group of links (A-S, A-B, A-D) linking said node (A) to its neighbouring nodes (S, B, D),
- when the routing information values associated with the links of said group of links are not all equal, successively replacing (402) the lowest routing information value or values from among those associated with the links of said group (A-S, A-B, A-D) with the immediately higher routing information value among those associated with the links of said group (A-S, A-B, A-D) and until the routing information values associated with the links of said group (A-S, A-B, A-D) are all equal,
- then incrementing (403) simultaneously the set of routing information values associated with the links of said group (A-S, A-B, A-D) by a predetermined increment Δm and repeating this operation until said values reach a given maximum, the increment Δm being determined such as to limit the appearance of routing loops in the network to below a given number and to limit the convergence time that passes between the initiation of the method and its conclusion,
- wherein after each modification of the routing information value, said node (A) leaving the network transmits this modification to its neighbouring nodes.

2. The method according to claim 1, **characterised in that** the increment Δm is set at 1.

3. The method according to any of the preceding claims, **characterised in that** the routing information associated with a link of the network is a metric proportional to the cost linked to the use of said link.

4. The method according to any of the preceding claims, **characterised in that** said routing information is used by a routing protocol in the linking state to determine, at any time, the optimal cost route between two nodes.

5. The method according to any of the preceding claims, **characterised in that** the routing device of the node (A) is alerted of the future departure of the node (A) of the network by at least one of the following means: an alert generated by the node (A) or detection of the movements of the node (A).

6. The method according to any of the preceding claims, **characterised in that** the node (A) leaves the network when the routing information values associated with the links of said group (A-S, A-B, A-D) have reached a given maximum.

7. A routing device, placed on board a mobile node communicating within a meshed network, adapted to implement the method of generating routing information according to any of claims 1 to 6.

8. The routing device according to claim 7, **characterised in that** it is furthermore adapted to produce a piece of information on the time of completion of said method of generating routing information according to any of claims 1 to 6.

FIG.1

FIG.2

→ Chemin de A vers D tel que vu par A

--→ Chemin de S vers D tel que vu par S

Chemin de A vers D tel que vu par A

Chemin de S vers D tel que vu par S

FIG.3

EP 2 656 558 B1

FIG.4

EP 2 656 558 B1

FIG.5

EP 2 656 558 B1

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. FRANCOIS ; M. SHAND ; O. BONAVENTURE.** Disruption free topology reconfiguration in OSPF networks. *26th IEEE International Conférence on Computer Communications (INFOCOM'07),* Mai 2007